# EUROPÄISCHE PATENTSCHRIFT

(11) **EP 0 528 230 B1**
(45) Veröffentlichungstag und Bekanntmachung des Hinweises auf die Patenterteilung: **11.10.1995**
(21) Anmeldenummer: 92113001.9
(22) Anmeldetag: 30.07.1992
(51) Int. Cl.: B60R 22/40

(54) **Geräuschgedämpfter Sensor für einen Sicherheitsgurtaufroller**
Soundproofed sensor for a safety belt retractor
Détecteur insonorisé pour enrouleur de ceinture de sécurité

(30) Priorität: 20.08.1991 DE 9110281 U
(43) Veröffentlichungstag der Anmeldung: 24.02.1993
(73) Patentinhaber: TRW Occupant Restraint Systems GmbH, 73553 Alfdorf (DE)
(72) Erfinder: Kielwein, Thomas, W-7071 Eschach (DE); Schmid, Johannes, W-7070 Schwäbisch Gmünd-Hussenhofen (DE)
(74) Vertreter: Degwert, Hartmut, Dipl.-Phys.

(56) Entgegenhaltungen:
- DE-U- 9 001 078
- GB-A- 2 078 492
- GB-A- 2 138 139
- US-A- 4 844 374
- US-A- 4 998 684

## Beschreibung

Die Erfindung betrifft einen Sensor für die fahrzeugsensitive Auslösung des Sperrmechanismus eines Sicherheitsgurtaufrollers in einem Fahrzeug, mit einem Sensorgehäuse, das eine Mulde aufweist, in welcher eine Sensorkugel auf einer Auflagefläche aufgenommen ist, und einem schwenkbar am Sensorgehäuse gelagerten Sensorhebel, der eine Kappe aufweist, welche auf der Kugel aufliegt (Siehe z.B. US-A-4 844 374).

Ein solcher Sensor hat die Aufgabe, bei einer bestimmten Beschleunigung bzw. Verzögerung sowie einer Lageveränderung des Fahrzeugs die Verriegelung des Sicherheitsgurtaufrollers einzuleiten.

Wird eine bestimmte Ansprechschwelle überschritten, welche von der Geometrie, der Masse sowie der gegenseitigen Reibung der Sensorteile abhängt, so bewegt sich die Kugel in der Mulde des Sensorgehäuses aus einer Ruhelage heraus. Dabei drückt sie den Sensorhebel und eine damit verbundene Steuerklinke gegen eine außenverzahnte Steuerscheibe, die begrenzt verdrehbar an eine Gurtspule angeschlossen ist. Die Steuerscheibe wird durch den Eingriff der Steuerklinke blockiert und löst in bekannter Weise eine Blockierung des Gurtbandabzugs aus.

Auch durch Erschütterungen im Fahrbetrieb wird die Kugel ausgelenkt und schlägt dabei an andere Sensorteile an, was Geräusche verursacht. Besonders bei Gurtaufrollern am Rücksitz eines Fahrzeuges und bei unter einer Hutablage angeordneten Gurtaufrollern, die in der Nähe des Gehörs der Fahrzeuginsassen angeordnet sind, können die so verursachten Geräusche als störend empfunden werden.

Der Erfindung liegt daher die Aufgabe zugrunde, einen Sensor zu schaffen, bei dem hörbare Geräusche vermindert sind und der gleichzeitig kostengünstig herstellbar ist.

Diese Aufgabe wird bei einem gattungsgemäßen Sensor erfindungsgemäß dadurch gelöst, daß wenigstens einer der an der Kugel anliegenden Teile, die Auflagefläche bzw. die Kappe, des Sensors über wenigstens einen gestreckten Steg an das Sensorgehäuse angeschlossen und unter der Wirkung der im Fahrbetrieb auf die Kugel übertragenen Erschütterungen elastisch auslenkbar ist.

Bei der Erfindung wird die Erkenntnis ausgenutzt, daß für die Geräuschentwicklung ein Anschlagen der Kugel an der Mulde und an der Kappe des Sensorhebels sowie das Lagerspiel des zwecks sicheren Ansprechen des Sensors leichtgängig gelagerten Sensorhebels verantwortlich sein kann. Ferner kann der Sensorhebel oder das Sensorgehäuse oder das gesamte Sensorsystem zu Eigenschwingungen angeregt werden. Auftretende Schwingungen werden durch die elastische Anbindung wirkungsvoll gedämpft, da Verformungsarbeit an den Stegen geleistet wird, beziehungsweise in einen Bereich des akustischen Spektrums verlegt, in dem sie nicht mehr gehört werden. Je nach der praktischen Ausführung des Sensors und seinem Einsatzort im Fahrzeug kann bereits ein Teil der angegebenen Maßnahmen zur wirksamen Geräuschdämpfung ausreichen, nämlich die elastische Anbindung über einen oder mehrere Stege zwischen dem Sensorhebel und dem Sensorgehäuse, zwischen einer Auflagefläche für die Kugel in der Mulde und dem Sensorgehäuse und/oder zwischen einer Auflagefläche der Kappe auf der Kugel und dem Sensorhebel.

Die Ausbildung der dämpfenden Elemente in Form gestreckter Stege erlaubt eine kostengünstige Fertigung. Bei einer Herstellung mittels Kunststoffspritzguß ergeben sich weitere Kostenvorteile, wenn die Stege einstückig mit anderen Sensorteilen gebildet sind.

Vorteilhafte Ausführungsformen der Erfindung sind in den Unteransprüchen angegeben.

Weitere Merkmale und Vorteile der Erfindung ergeben sich aus der folgenden Beschreibung mehrerer Ausführungsformen und aus der Zeichnung, auf die Bezug genommen wird.
- Fig. 1: ist eine Seitenansicht eines Sensors und zeigt eine elastische Anbindung des Sensorhebels an das Sensorgehäuse;
- Fig. 2: ist eine Draufsicht auf den Sensorhebel nach Fig. 1;
- Fig. 3 und 4: zeigen andere Ausbildungen der Anbindung des Sensorhebels an das Sensorgehäuse bei dem Sensor nach Fig. 1;
- Fig. 5: zeigt eine zusätzliche Anbindung des Sensorhebels über eine Sollbruchverbindung an das Sensorgehäuse bei dem Sensor nach Fig. 1;
- Fig. 6: dient zur Erläuterung einer Begrenzung des Wegs der elastischen Auslenkung des Sensorhebels durch Anschlagmittel;
- Fig. 7: zeigt teilweise geschnitten einen Teil einer Auführungsform eines erfindungsgemäßen Sensors zur Erläuterung der Anbindung einer Auflagefläche für die Kugel in der Mulde mit dem Sensorgehäuse;
- Fig. 8: ist eine Draufsicht auf das in Fig. 7 dargestellte Sensorgehäuse von oben und bei weggelassener Kugel;
- Fig. 9 und 10: zeigen die Mulde des Sensorgehäuses im Schnitt und in Draufsicht bei einer besonderen Ausführungsform; und
- Fig. 11 bis 13: zeigen beispielhaft besondere Ausführungsformen für die Anbindung einer Auflagefläche über durch Aussparungen gebildete Stege.

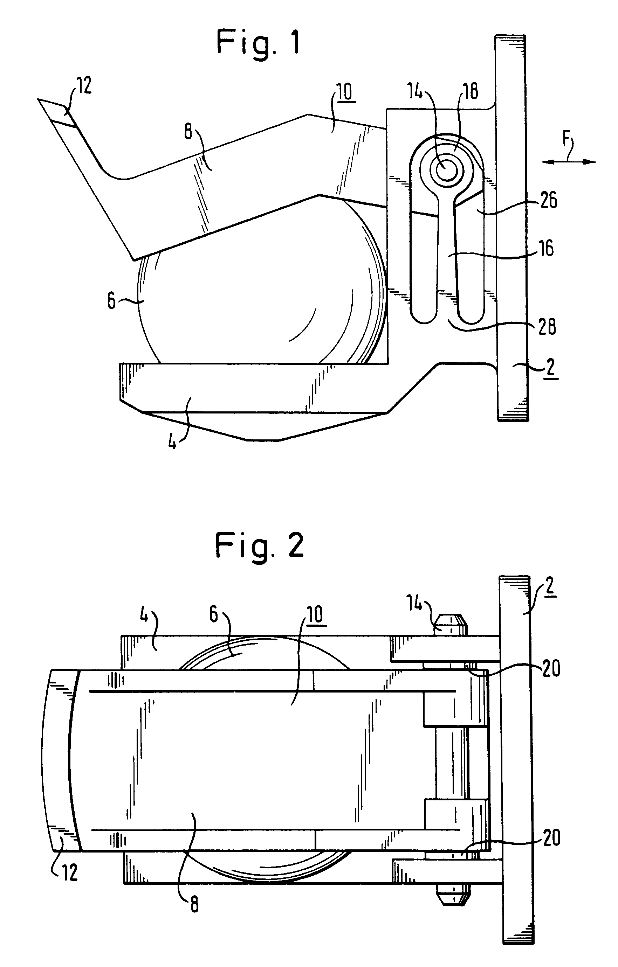

In Fig. 1 ist ein Teil eines Sensorgehäuses 2 als Mulde 4 ausgebildet, in welcher eine Kugel 6 aufgenommen ist. Auf der Kugel liegt eine Kappe 8 auf, welche Teil eines Sensorhebels 10 ist. Der Sensorhebel 10 weist an einer Ende eine Steuerklinke 12 auf, die einer nicht eingezeichneten außenverzahnten Steuerscheibe gegenüberliegt. Der Sensorhebel 10 ist ferner über einen Lagerstift 14 am Sensorgehäuse 2 gelagert.

Am Gehäuse 2 sind zwei langgestreckte Stege 16, von denen in Fig. 1 nur einer sichtbar ist, jeweils einstückig mit ihrem einen Ende angebunden. An ihrem anderen Ende sind die Stege 16 zu einer Öse 18 erweitert, durch welche der Lagerstift 14 verläuft. Der Lagerstift 14 bzw. die Ösen 18 sind so bemessen, daß eine leichtgängige Lagerung des Sensorhebels 10 gewährleistet ist. Anstelle eines gesonderten Lagerstifts 14, der durch den Sensorhebel 10 hindurch verläuft, können auch entsprechend geformte Vorsprünge am Sensorhebel 10 in die Ösen 18 eingreifen. Der Durchmesser und die Ausrichtung der Stege 16 sind so gewählt, daß eine elastische Auslenkung des Sensorhebels 12 im wesentlichen in Richtung einer Fahrzeuglängsachse F erfolgt.

Es hat sich gezeigt, daß bei einer derartigen Aufhängung des Sensorhebels aufgrund von Erschütterungen im Fahrbetrieb auftretende Geräusche erheblich vermindert werden, insbesondere diejenigen Geräusche, die bei einer Belastung des Sensorhebels 10 durch die Kugel 6 oder bei einer Belastung des Sensorhebels 10 durch Eingriff der Steuerklinke 12 in die Zahnscheibe ausgelöst werden. Außerdem ist es praktisch ausgeschlossen, daß Schwingungen resonant übertragen werden, da die langgestreckten Stege 16 eine verglichen mit der Eigenelastizität des Sensormaterials sehr hohe Nachgiebigkeit der Anbindung bewirken, so daß keine Eigenfrequenzen aus dem Bereich des Sensorhebels 10 auf das Sensorgehäuse 2 übertragen werden. Eine wesentliche Geräuschdämpfung hat ihre Ursache auch in der an den Stegen 16 zu leistenden Verformungsarbeit.

In der Draufsicht nach Fig. 2 sind scheibenförmige Dämpfungselemente 20 erkennbar, die mit den hier nicht sichtbaren Ösen 18 einteilig ausgebildet sind und den Sensorhebel 10 auch in Axialrichtung des Lagerstifts 14 abfedern.

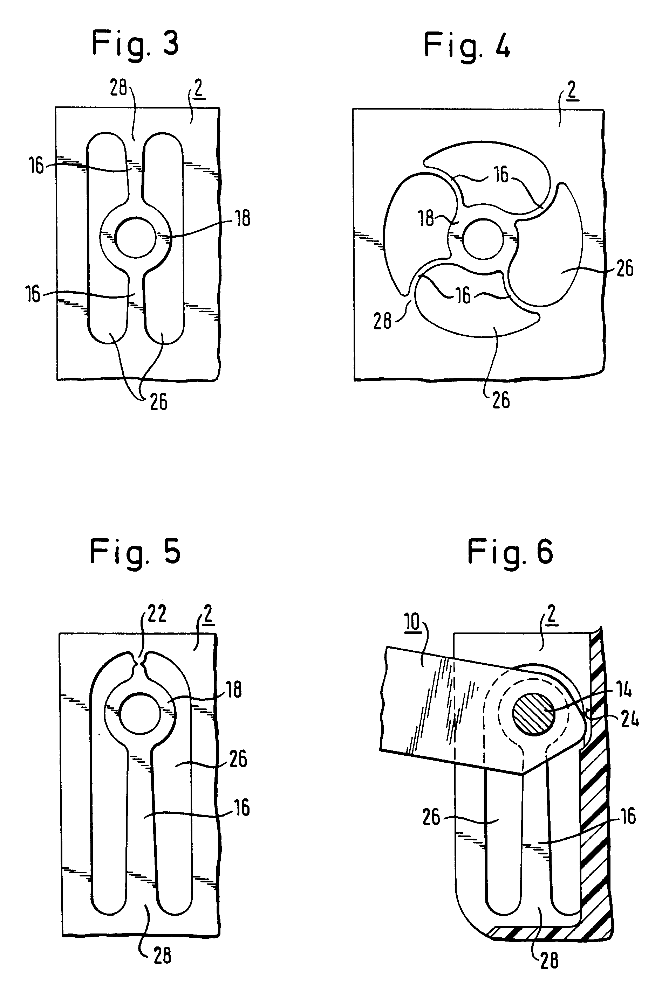

Eine elastische Anbindung der Öse 18 an das Gehäuse 2 über zwei bzw. vier Stege 16 ist in den Fig. 3 und 4 dargestellt. Bei der Ausführungsform nach Fig. 4 ist die Anbindung in allen Richtungen in der Zeichenebene etwa gleichermaßen elastisch.

In Fig. 5 ist ein Steg 16 über eine Sollbruchverbindung 22 zusätzlich mit dem Sensorgehäuse 2 verbunden. Die Sollbruchverbindung 22 besteht aus einem relativ kurzen und teilweise eingeschnürten Steg und dient zur Stabilisierung bei der Fertigung und bei der Montage des Sensors. Die Sollbruchverbindung 22 wird bei der ersten Belastung des Sensors durchtrennt, so daß der Steg 16 elastisch auslenkbar wird.

In Fig. 6 ist der Sensorhebel 10 so ausgebildet, daß er nach einer gewissen Auslenkung der Stege 16 auf eine Anschlagfläche 24 am Sensorgehäuse 2 trifft, damit die Stege 16 nicht übermäßig belastet werden. Dies beugt einer etwaigen Materialermüdung wirksam vor.

Allen zuvor beschriebenen Ausführungsformen ist gemeinsam, daß die Stege 16 durch sie teilweise umgebende Aussparungen 26 in einem Wandungsteil des Sensorgehäuses 2 abgegrenzt und über Anschlußstellen 28 einstückig mit dem Sensorgehäuse 2 verbunden sind. Dies ermöglicht insbesondere bei der Herstellung des Sensors durch Spritzgießen eine sehr rationelle Fertigung. Teile, die denen aus Fig. 1 entsprechen, sind mit gleichen Bezugszahlen gekennzeichnet.

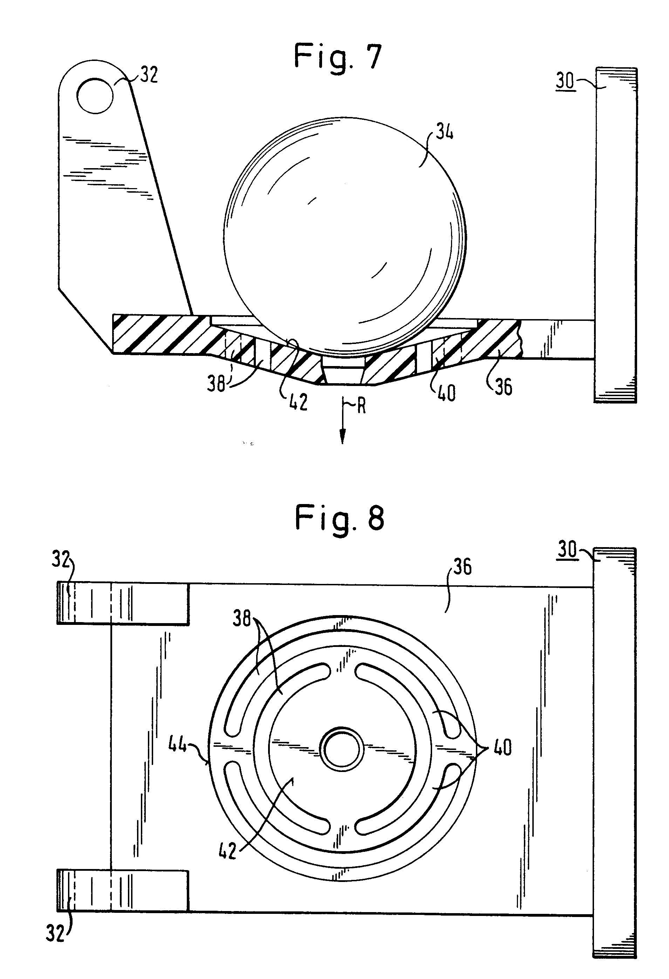

Ein Sensorgehäuse 30 in Fig. 7 ist abweichend von dem Sensorgehäuse 2 nach Fig. 1 geformt. Insbesondere ist zur Lagerung eines nicht eingezeichneten Sensorhebels eine starre Öse 32 vorgesehen. Es ist aber auch eine Ausführungsform vorgesehen, bei der die Öse 32 in einer der zuvor beschriebenen Weisen elastisch an das Sensorgehäuse 30 angebunden ist. Eine Kugel 34 liegt in einer geschnitten dargestellten Mulde 36 des Sensorgehäuses 30, in welcher vier halbkreisförmige Aussparungen 38 ausgebildet sind, wie am besten aus Fig. 8 ersichtlich ist. Zwischen den Aussparungen 38 verbleiben Stege 40, durch welche eine Auflagefläche 42 für die Kugel 34 an dem Sensorgehäuse 30 angebunden ist. Zweckmäßigerweise sind die Aussparungen 38 und die Stege 40 rotationssymmetrisch zum Mittelpunkt der Auflagefläche 42 ausgebildet. Die Auflagefläche 42 ist unter der Wirkung der im Fahrbetrieb auf die Kugel 34 übertragenen Erschütterungen in einer Richtung R elastisch auslenkbar. Zusätzlich kann die Ebene der Auflagefläche 42 kippen, da die Aufhängung der Auflagefläche 42 einer kardanischen Aufhängung gleicht. Beim Anschlagen der Kugel 34 an die Auflagefläche 42 wird die kinetische Energie der Kugel 34 zum großen Teil in Verformungsarbeit der vier Stege 40 umgewandelt, so daß nur ein sehr geringer Anteil der entsprechenden Schwingungen auf das Sensorgehäuse 30 übertragen wird. Eine resonante Übertragung von Schwingungen wird wie bei der eingangs beschriebenen Ausführungsform verhindert. Eventuell verbleibende Schwingungen liegen nicht mehr in einem Bereich des akustischen Spektrums, in dem sie als störend empfunden werden. Daher ist die Geräuschminderung äußerst effektiv. Außerdem kann der so ausgerüstete Sensor wie schon bei der zuvor beschriebenen Ausführungsform äußerst preisgünstig durch Spritzgießen hergestellt werden. Das Sensorgehäuse 30 kann dabei zusammen mit den Stegen 40 und der Auflagefläche 42 ein einstückiges Teil bilden. Die Auflagefläche 42 und die Stege 40 können aber auch ein Einzelteil mit einer äußeren Umrandung 44 bilden, das separat hergestellt und in das Sensorgehäuse 30 eingeclipst wird.

Um auch das Auftreffen der Kappe 8 des Sensorhebels 10 auf die Kugel 6 in Fig. 1 34 zu dämpfen, ist vorgesehen, die Kappe 8 des Sensorhebels 10 ebenso auszubilden wie die Mulde 36 des Sensorgehäuses 30 in den Fig. 7 und 8.

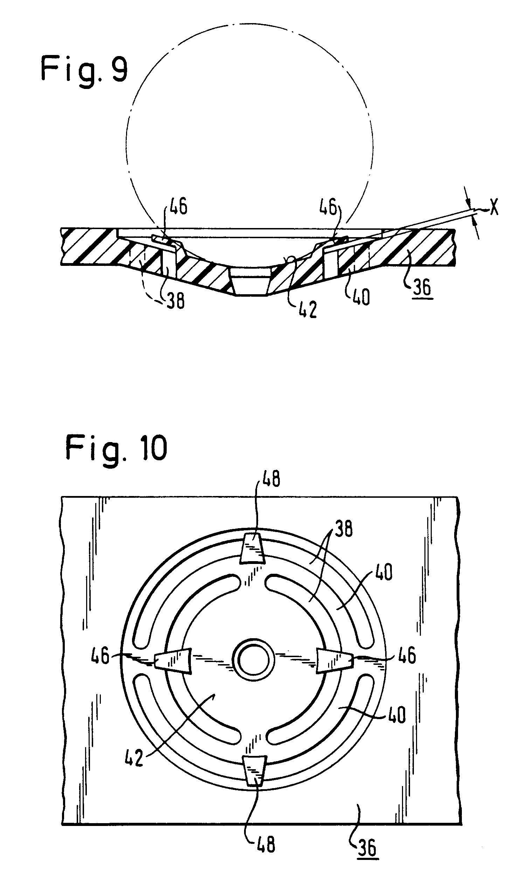

In Fig. 9 springen zwei einstückig angeformte Nasen 46 von der Auflagefläche 42 nach außen vor und überragen einen Teil der Stege 40 mit Spiel X, so daß sie einen Anschlag zur Federwegbegrenzung bilden. In diesem Fall ist eine Ermüdung des Materials der Stege 40 ausgeschlossen. In der Draufsicht in Fig. 10 sind zwei weitere Nasen 48 erkennbar, die jeweils von den Stegen 40 aus eine äußere Ausnehmung 38 übergreifen und auch an dieser Stelle eine Federwegbegrenzung bewirken.

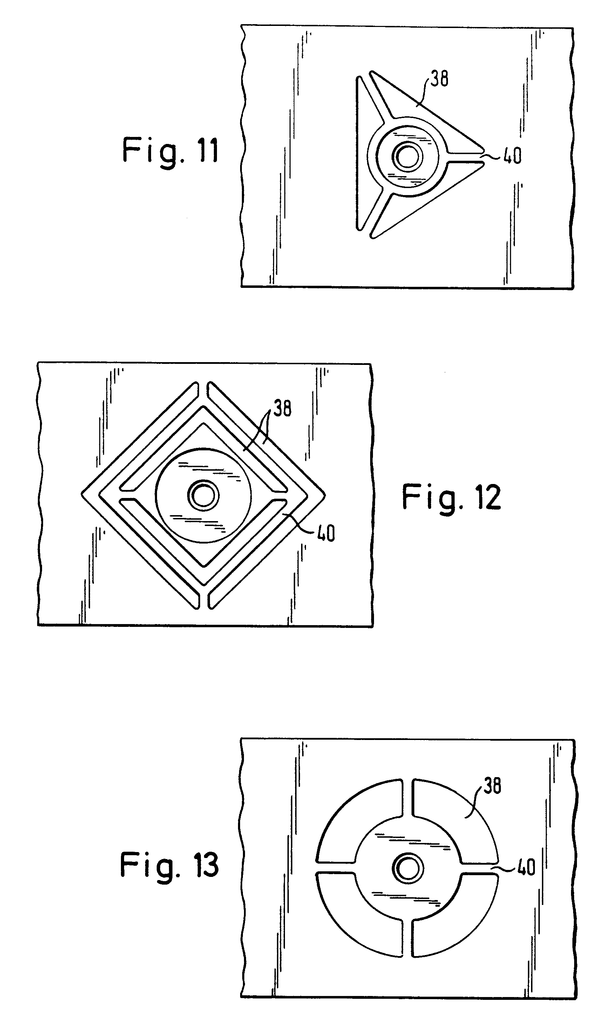

Weitere, unter vielen Möglichkeiten besonders zweckmäßige Ausführungsformen der Geometrie der Ausnehmungen 38 und der Stege 40 sind in den Fig. 11 bis 13 gezeigt. Allen diesen Ausführungsformen ist gemeinsam, daß sie rotationssymmetrisch sind. Falls für spezielle Anwendungen eine unterschiedliche Elastizität der Lagerung der Auflagefläche 42 in verschiedenen Richtungen gewünscht wird, können die Ausnehmungen 38 und die Stege 40 aber auch unsymmetrisch angeordnet sein.

Je nach der speziellen Ausführung des Sensors und dem jeweiligen Anwendungszweck kann bereits mit einer der geschilderten Maßnahmen eine genügende Geräuschdämpfung erzielt werden, also der elastischen Anbindung des Sensorhebels 10 an das Sensorgehäuse 2 oder der elastischen Anbindung einer in den Figuren nicht sichtbaren Auflagefläche des Sensorhebels 10 auf die Kugel 6 an den Sensorhebel 10 oder der elastischen Anbindung der Auflagefläche 42 für die Kugel 34 in der Mulde 36 an das Sensorgehäuse 2.

## Patentansprüche

1. Sensor für die fahrzeugsensitive Auslösung des Sperrmechanismus eines Sicherheitsgurtaufrollers in einem Fahrzeug, mit einem Sensorgehäuse (2, 30), das eine Mulde (36) aufweist, in welcher eine Sensorkugel (6, 34) auf einer Auflagefläche (42) aufgenommen ist, und einem schwenkbar am Sensorgehäuse (2, 30) gelagerten Sensorhebel (10), der eine Kappe (8) aufweist, welche auf der Kugel (6, 34) aufliegt, dadurch gekennzeichnet, daß wenigstens einer dieser an der Kugel (6, 34) anliegenden Teile (8, 42) des Sensors über wenigstens einen gestreckten Steg (16, 40) an das Sensorgehäuse (2, 30) angeschlossen und unter der Wirkung der im Fahrbetrieb auf die Kugel (6, 34) übertragenen Erschütterungen elastisch auslenkbar ist.

2. Sensor nach Anspruch 1, dadurch gekennzeichnet, daß wenigsten ein Steg (16) mit seinem einen Ende einstückig mit dem Sensorgehäuse (2) verbunden ist und an seinem anderen Ende ein Lager für den Sensorhebel (10) aufweist.

3. Sensor nach Anspruch 2, dadurch gekennzeichnet, daß der wenigstens eine Steg (16) in einem Wandungsteil des Sensorgehäuses (2) durch eine ihn teilweise umgebende Aussparung (26) abgegrenzt ist.

4. Sensor nach einem der vorstehenden Ansprüche, dadurch gekennzeichnet, daß der Sensorhebel (10) an zwei einander mit Abstand gegenüberliegenden Stegen (16) gelagert ist, die um ihre Anschlußstelle (28) am Sensorgehäuse (2) elastisch auslenkbar sind.

5. Sensor nach Anspruch 4, gekennzeichnet durch Dämpfungselemente (20), die zwischen dem Sensorhebel (10) und den Stegen (16) eingefügt sind.

6. Sensor nach einem der vorstehenden Ansprüche, dadurch gekennzeichnet, daß der wenigstens eine Steg (16) über eine seine Auslenkung behindernde Sollbruchverbindung (22) zusätzlich mit dem Sensorgehäuse (2) vorübergehend gekoppelt ist.

7. Sensor nach Anspruch 1, dadurch gekennzeichnet, daß zwischen einer Auflagefläche (42) für die Kugel (34) in der Mulde (36) und dem Sensorgehäuse (30) und/oder zwischen einer Auflagefläche der Kappe (8) auf der Kugel (34) und dem Sensorhebel (10) mehrere funktionell parallel wirkende Stege (40) angeordnet sind.

8. Sensor nach Anspruch 7, dadurch gekennzeichnet, daß die Stege (40) rotationssymmetrisch am Umfang der Auflagefläche (42) angeordnet sind.

9. Sensor nach einem der Ansprüche 7 oder 8, dadurch gekennzeichnet, daß mindestens eine Auflagefläche (42) mindestens zusammen mit den davon ausgehenden Stegen (40) einstück verbunden ist, wobei die Stege (40) durch Aussparungen (38) in Wandungsteilen am Umfang der Auflagefläche (42) abgegrenzt sind.

10. Sensor nach Anspruch 9, dadurch gekennzeichnet, daß die Aussparungen (38) kreisförmig am Umfang der Auflagefläche (42) verlaufen.

11. Sensor nach einem der vorstehenden Ansprüche, gekennzeichnet durch Anschlagmittel (24, 46, 48) zur Begrenzung des Wegs der elastischen Auslenkung des Sensorhebels (10) bzw. der Auflagefläche (42).

12. Sensor nach Anspruch 9 und 11, dadurch gekennzeichnet, daß wenigstens zwei jeweils an einem Rand einer Aussparung (38) vorspringende Nasen (46, 48) mit Spiel über einen gegenüberliegenden Rand der Aussparung (38) ragen.

## Claims

1. Sensor for the vehicle-sensitive triggering of the blocking mechanism of a safety belt retractor in a vehicle, comprising a sensor housing (2, 30) having a trough (36) in which a sensor ball (6, 34) is received at a support surface (42) and a sensor lever (10) which is pivotally mounted on the sensor housing (2, 30) and has a cap (8) which bears on the ball (6, 34), characterized in that at least one of said parts (8, 42) of the sensor bearing on the ball (6, 34) is connected via at least one elongated web (16, 40) to the sensor housing (2, 30) and is elastically deflectable under the action of the vibrations transmitted to the ball (6, 34) when the vehicle is travelling.

2. Sensor according to claim 1, characterized in that at least one web (16) is connected with its one end integrally to the sensor housing (2) and at its other end has a bearing for the sensor lever (10).

3. Sensor according to claim 2, characterized in that the at least one web (16) is defined in a wall portion of the sensor housing (2) by a cutout (26) partially surrounding it.

4. Sensor according to any one of the preceding claims, characterized in that the sensor lever (10) is mounted on two webs (16) which lie opposite each other in spaced relationship and which are elastically deflectable about their joint (28) to the sensor housing (2).

5. Sensor according to claim 4, characterized by damping elements (20) which are inserted between the sensor lever (10) and the webs (16).

6. Sensor according to any one of the preceding claims, characterized in that the at least one web (16) is additionally temporarily coupled to the sensor housing (2) via a desired breakage connection (22) obstructing the deflection of said web.

7. Sensor according to claim 1, characterized in that between a support surface (42) for the ball (34) in the trough (36) and the sensor housing (30) and/or between a support surface of the cap (8) on the ball (34) and the sensor lever (10) a plurality of webs (40) acting fundctionally in parallel are arranged.

8. Sensor according to claim 7, characterized in that the webs (40) are arranged rotationally summetrically at the periphery of the support surface (42).

9. Sensor according to any one of claims 7 or 8, characterized in that at least one support surface (42) is integrally joined at least to the webs (40) projecting therefrom, the webs (40) being defined by cutouts (38) in wall portions at the periphery of the support surface (42).

10. Sensor according to claim 9, characterized in that the cutouts (38) extend circularly at the periphery of the support surface (42).

11. Sensor according to any one of the preceding claims, characterized by stop means (24, 46, 48) for limiting the travel of the elastic deflection of the sensor lever (10) or the support surface (42).

12. Sensor according to claims 9 and 11, characterized in that at least two noses (46, 48) projecting at the edge of a cutout (38) extend with clearance over an opposite edge of the cutout (38).

## Revendications

1. Capteur pour le déclenchement, sensible au véhicule, du mécanisme de blocage d'un enrouleur de ceinture de sécurité d'un véhicule, comportant un boîtier (2, 30) sur une surface d'appui (42), lequel présente une cavité (36) dans laquelle est logée une bille (6, 34), ainsi qu'un levier (10) monté pivotant sur le boîtier (2, 30) du capteur, qui comporte un capuchon (8) reposant sur la bille (6, 34), caractérisé en ce que l'une au moins de ces pièces (8, 42) du capteur, s'appliquant contre la bille (6, 34), est rattachée au boîtier (2, 30) du capteur par au moins une cloison (16, 40) allongée et est déviable élastiquement sous l'action des secousses transmises à la bille (6, 34) pendant la marche.

2. Capteur selon la revendication 1, caractérisé en ce qu'une cloison (16) au moins est reliée d'un seul tenant, par l'une de ses extrémités, avec le boîtier (2) du capteur et présente, à son autre extrémité, un palier pour le levier (10) du capteur.

3. Capteur selon la revendication 2, caractérisé en ce qu'une cloison (16) au moins est délimitée dans une partie de paroi du boîtier (2) par un évidement (26) l'entourant partiellement.

4. Capteur selon l'une des revendications précédentes, caractérisé en ce que le levier (10) du capteur est monté sur deux cloisons (16) espacées et opposées l'une à l'autre, qui sont orientables élastiquement autour de leur point de raccordement (28) sur le boîtier (2) du capteur.

5. Capteur selon la revendication 4, caractérisé par des éléments d'amortissement (20) qui sont insérés entre le levier (10) du capteur et les cloisons (16).

6. Capteur selon l'une des revendications précédentes, caractérisé en ce qu'une cloison (16) au moins est en plus provisoirement accouplée avec le boîtier (2) du capteur par une liaison à point de rupture (22) empêchant sa déviation.

7. Capteur selon la revendication 1, caractérisé en ce que plusieurs cloisons (40) agissant parallèlement de manière fonctionnelle sont placées entre une surface d'appui (42) de la bille (34) dans la cavité (36) et le boîtier (30) du capteur et/ou entre une surface d'appui du capuchon (8) sur la bille (34) et le levier (10) du capteur.

8. Capteur selon la revendication 7, caractérisé en ce que les cloisons (40) sont placées avec symétrie de révolution sur le pourtour de la surface d'appui (42).

9. Capteur selon l'une des revendications 7 ou 8, caractérisé en ce qu'au moins une surface d'appui (42) est reliée d'un seul tenant au moins avec les cloisons (40) partant de celle-ci, les cloisons (40) étant délimitées par des évidements (38) pratiqués dans des parties de paroi, sur le pourtour de la surface d'appui (42).

10. Capteur selon la revendication 9, caractérisé en ce que les évidements (38) s'étendent en arc de cercle sur le pourtour de la surface d'appui (42).

11. Capteur selon l'une des revendications précédentes, caractérisé par des moyens de butée (24, 46, 48) destinés à délimiter le parcours de la déviation élastique du levier (10) du capteur ou de la surface d'appui (42).

12. Capteur selon les revendications 9 et 11, caractérisé en ce qu'au moins deux ergots (46, 48) faisant saillie d'un bord d'un évidement (38) dépassent avec un certain jeu un bord opposé de l'évidement (38).
